# FASCICULE DE BREVET EUROPEEN

(11) **EP 0 785 141 B1**
(45) Date de publication et mention de la délivrance du brevet: **22.12.1999**
(21) Numéro de dépôt: 96490003.9
(22) Date de dépôt: 17.01.1996
(51) Int. Cl.: B65D 6/18, B65D 5/42

(54) **Conteneur réutilisable ou jetable pour le conditionnement**
Mehr- oder Einwegverpackungsbehälter
Reusable or disposable conditioning container

(43) Date de publication de la demande: 23.07.1997
(73) Titulaire: KIPLIVIT SA, Société Anonyme dite:, F-59420 Mouvaux (FR)
(72) Inventeur: Hennebo, Robert, F-59250 Halluin (FR); Delplanque, Alain, F-59250 Halluin (FR)
(74) Mandataire: Lepage, Jean-Pierre

(56) Documents cités:
- CH-A- 381 413
- DE-C- 184 840
- DE-C- 239 284
- DE-C- 537 986
- FR-A- 456 478
- FR-A- 493 022

## Description

L'objet de la présente invention est un conteneur pour le conditionnement de produits manufacturés unitaires ou en vrac, destiné à constituer un emballage réutilisable ou jetable de forme sensiblement polyédrique et de faible volume, pour le stockage et la manutention des produits. Il trouvera plus particulièrement son application dans l'industrie du bois et du carton, pour la réalisation d'emballages en ces matériaux.

Les produits industriels placés dans le conteneur pour le conditionnement pourront être très divers et notamment lourds ou fragiles, unitaires ou en vrac. Par exemple, ils pourront être des pièces détachées pour l'automobile ou l'aéronautique ou encore des matériels informatiques, électroniques ou automatiques.

On connaît déjà des emballages qui permettent de placer dans leur volume intérieur des produits afin de les stocker ou de les manipuler. Différents matériaux sont employés pour réaliser de tels emballages, par exemple le bois ou le carton ondulé.

Les emballages fabriqués en carton ondulé sont légers, peu onéreux et aisés à mettre en forme du fait de la facilité de pliage du carton ondulé. Les panneaux peuvent être mis en forme par des pliures du carton et solidarisés notamment grâce à des agrafes. Néanmoins, ces emballages sont mécaniquement peu résistants. De ce fait, ils ne permettent pas de supporter de lourdes charges ni d'assurer une importante protection aux chocs des produits industriels stockés. Par conséquent, ils se prêtent peu au stockage et à la manipulation des produits lourds et des produits fragiles.

Par ailleurs, les caisses en carton sont faciles à monter mais sont difficilement réutilisables. En effet, elles supportent mal de nombreuses opérations de montage et de démontage. On constate une usure rapide au niveau des pliures du carton ondulé et les moyens de fixation employés, notamment les agrafes, sont difficiles à démonter. Ces fixations endommagent aussi souvent les panneaux de carton ondulé. Par conséquent, les emballages en carton ondulé sont la plupart du temps destinés à n'être utilisés qu'une seule fois. Si on désire néanmoins les recycler, il faudra les réaliser en carton très épais. Ce type de matériau étant très cher, il est peu employé. Les caisses sont donc la plupart du temps en carton moins épais et sont rarement réutilisées et perdues dans de nombreux cas.

Etant donné les limites d'application des emballages en carton ondulé, on a fabriqué des conteneurs en bois. Le bois offre en effet une meilleure protection des produits et est plus résistant que le carton.

On a particulièrement réalisé des caisses en bois repliables afin de pouvoir les réutiliser : une fois l'utilisation terminée, on replie la caisse vide de façon à ce qu'elle occupe un faible volume, ce qui permet de la stocker ou de la transporter plus facilement. Pour réaliser une caisse repliable, il est connu d'utiliser des articulations afin de relier les différents éléments composant la caisse.

On peut notamment réaliser une caisse repliable à partir de panneaux latéraux, d'un fond, d'un couvercle et de charnières souples par exemple constituées par des bandes de tissu collées sur les éléments constitutifs de la caisse. Les caisses réalisées sont faciles à fabriquer et résistantes. Durant leur utilisation, elles assurent au produit une bonne protection aux chocs et à l'humidité, elles se replient ensuite aisément et occupent alors un faible volume. Leur durée de vie est par ailleurs importantes de par la bonne tenue du bois et des articulations dans le temps.

On connaît du brevet FR-A-456.478 un procédé de fabrication de boîtes en bois particulier. Selon ce document, plusieurs planches composant la boîte, à savoir le fond, les parois avant et arrière et le couvercle, sont reliées et articulées notamment par une partie assurant la liaison.

Les planches composant les deux dernières parois sont engagées dans des rainures et maintenues en coopération avec les planches articulées.

Les caisses repliables en bois connues donnent satisfaction principalement lorsqu'elles sont de grandes tailles et destinées à être utilisées de nombreuses fois. Néanmoins, leur conception ne se prête pas bien à la réalisation d'emballages bon marché et de petites dimensions. En effet, les caisses présentent généralement beaucoup d'éléments constitutifs : de nombreux panneaux de bois et de nombreuses articulations sont nécessaires, le coût de ces éléments est donc important et augmente le prix de revient global de la caisse.

Par ailleurs, de multiples opérations sont nécessaires à leur fabrication. Il faut par exemple mettre en place de nombreuses articulations et aussi parfois réaliser un renfort sur le fond pour maintenir l'ensemble. Le coût de fabrication est par conséquent important et il augmente également le prix de revient global de la caisse. Les caisses en bois repliables existantes présentent donc l'inconvénient d'être relativement chères, comparées notamment à celles en carton ondulé.

Cet inconvénient a plusieurs conséquences, la première est que le prix élevé limite les possibilités d'utilisation des caisses en bois repliables. Ainsi, on réalise principalement des caisses en bois de grandes tailles. En effet, les emballages de grandes dimensions ont un prix de vente plus élevé que les petits. Par contre, les caisses en bois que l'on connaît jusqu'à présent sont de conception trop lourdes et trop onéreuses pour être compétitive dans le domaine des emballages de faible volume. Un autre inconvénient est donc qu'elles s'adaptent peu à la réalisation d'emballages de faible volume.

Une autre conséquence de leur prix de revient élevé est que les caisses en bois actuelles ne s'intègrent pas bien dans le marché des emballages perdus. Elles sont en effet généralement plus coûteuses que les emballages en carton. De ce fait, il faut souvent amortir leur coût sur plusieurs utilisations. C'est pourquoi, les utilisateurs désireux de jeter les emballages après le premier usage préfèrent souvent les caisses en carton même si celles-ci sont moins résistantes et moins protectrices pour les produits. Cela limite encore la souplesse d'utilisation des caisses en bois actuelles.

Le conteneur pour le conditionnement de produits manufacturés unitaires ou en vrac destiné à constituer un emballage réutilisable ou jetable de forme sensiblement polyédrique et de faible volume, décrit par la présente invention, possède de nombreux avantages.

Un des buts principaux de la présente invention est de réaliser des emballages à un prix de revient peu élevé.

Ce conteneur pour le conditionnement peut être réalisé en différents matériaux et notamment le bois et le carton. Il sera préférentiellement en bois. Dans ce cas, il offre une plus grande simplicité de fabrication que les caisses en bois actuelles. Il est en effet constitué de peu d'éléments. Leur transformation et leur assemblage sont peu coûteux car ils ne nécessitent que peu d'opérations. Par exemple, la présente invention ne possède aucun moyen de fixation courant utilisant des outils, tel que des clous, des vis ou des agrafes. Il s'ensuit que le prix de revient de la caisse est moins important puisque le coût des matières premières et le coût de fabrication sont diminués.

Un autre but de la présente invention est de réaliser des conteneurs de conception simple et d'utilisation facile.

En effet, un avantage du conteneur ici décrit est que son utilisation est très aisée. Il présente peu de constituants et il se monte facilement et rapidement. Il est donc non seulement moins cher mais aussi plus pratique que les caisses en bois que l'on connaît jusqu'à présent.

Un autre but de la présente invention est de réaliser des emballages de divers volumes et notamment de faible volume.

Pour ce faire, la présente invention a l'avantage d'être d'un usage plus souple et plus évolutif. Etant d'un coût inférieur, elle permet d'élargir le champ d'utilisation des emballages en bois : on peut les utiliser de manière compétitive en différents formats et notamment pour de faibles volumes. A titre d'exemple, on pourra communément réaliser et utiliser des caisses en bois de 1,20 mètres sur 0,40 mètre sur 0,40 mètre.

Un autre but de la présente invention est de constituer un emballage réutilisable et repliable facilement.

L'usage très large que l'on peut faire de la présente invention est que l'on pourra choisir plus facilement de réutiliser ou de jeter l'emballage. Le faible prix de revient des conteneurs ainsi réalisés permet d'amortir leur coût sur un nombre réduit d'utilisations. Un utilisateur désireux d'utiliser l'emballage un nombre limité de fois pourra donc choisir un conteneur pour le conditionnement tel que décrit par la présente invention.

Un autre but de la présente invention est de réaliser des emballages présentant une bonne cohésion des éléments les constituant. Pour ce faire, la présente invention a l'avantage de permettre la réalisation d'emballages sensiblement polyédriques dont les éléments constitutifs possèdent une bonne tenue. L'utilisation de rainures pour maintenir les panneaux latéraux permet de bloquer fermement chaque élément une fois le conteneur formé et le couvercle fermé. Le conteneur présente ainsi peu de jeu relatif entre ses constituants, sa mise en forme est précise et il présente un bon maintien et un bon équerrage.

Un autre avantage est que le conteneur pour le conditionnement ici décrit offre plusieurs possibilités de chargement. On peut en effet introduire les produits à stocker par le haut du conteneur une fois le couvercle ouvert. On peut également effectuer un chargement avant de placer l'un des panneaux latéraux du conteneur sans nuire à la cohésion de l'ensemble. Il est ainsi possible de charger le volume intérieur par le côté.

Un autre but de l'invention est donc de constituer un conteneur possédant une grande souplesse dans le choix du mode de chargement désiré.

Par ailleurs, les différents modes de réalisation de la présente invention offrent de nombreuses possibilités de manutention des conteneurs. On pourra adapter des moyens de préhension sur le conteneur suivant l'utilisation désirée.

Un autre but de la présente invention est donc de réaliser des caisses faciles à transporter et à manipuler même avec des charges importantes.

D'autres buts et avantages apparaîtront dans la description suivante qui n'est cependant donnée qu'à titre indicatif.

L'objet de la présente invention est un conteneur pour le conditionnement de produits manufacturés unitaires ou en vrac, destiné à constituer un emballage réutilisable ou jetable de forme sensiblement polyédrique et de faible volume, pour le stockage et la manutention des produits, comportant :
- une ceinture composée d'au moins quatre éléments à savoir un premier panneau frontal, un fond, un deuxième panneau frontal et un couvercle, ces éléments étant reliés entre eux par des articulations permettant de plier la ceinture afin de former au moins quatre faces du conteneur,
- au moins une rainure disposée à proximité de chaque bord longitudinal sur le premier panneau frontal, le deuxième panneau frontal, le fond et le couvercle, ladite rainure de chaque élément étant alignée pour réaliser une coulisse continue,
- au moins deux panneaux latéraux engagés dans la coulisse,
caractérisé par le fait qu'il présente des moyens, de la forme de crochets, étant fixés par encastrement sur le panneau latéral et sur l'un des panneaux frontaux et permettant de maintenir l'épaisseur des panneaux latéraux dans les rainures des panneaux frontaux, pour réaliser un emballage bon marché repliable et réutilisable.

Pour faciliter la compréhension de la description de l'invention figurent en annexe les dessins suivants :
- la figure 1 schématisant les éléments constitutifs principaux de l'invention,
- la figure 2 illustrant la formation d'un conteneur parallélépipédique,
- la figure 3 présentant le détail d'un crochet et des entailles pour son encastrement,
- la figure 4 illustrant un mode particulier de réalisation de l'invention,
- la figure 5 illustrant un mode particulier de réalisation monobloc de l'invention,
- la figure 6 illustrant un mode particulier de réalisation de l'invention en position d'utilisation,
- la figure 7 illustrant un mode particulier de pliage de l'invention,
- la figure 8 présentant un mode particulier de réalisation de l'invention,
- la figure 9 présentant le mode particulier de réalisation illustré par la figure 8 sous une autre vue.

L'objet de la présente invention est un conteneur pour le conditionnement de produits manufacturés unitaires ou en vrac.

La forme de ce conteneur est celle d'un polyèdre qui pourra se présenter sous plusieurs aspects extérieurs. Un cas particulier de réalisation du polyèdre sera un parallélépipède rectangle. Un autre cas particulier sera un polyèdre à ceinture hexagonale ou encore un polyèdre dont certaines faces sont trapézoïdales.

Le conteneur est principalement composé d'une ceinture (1) et de panneaux latéraux (6 et 7).

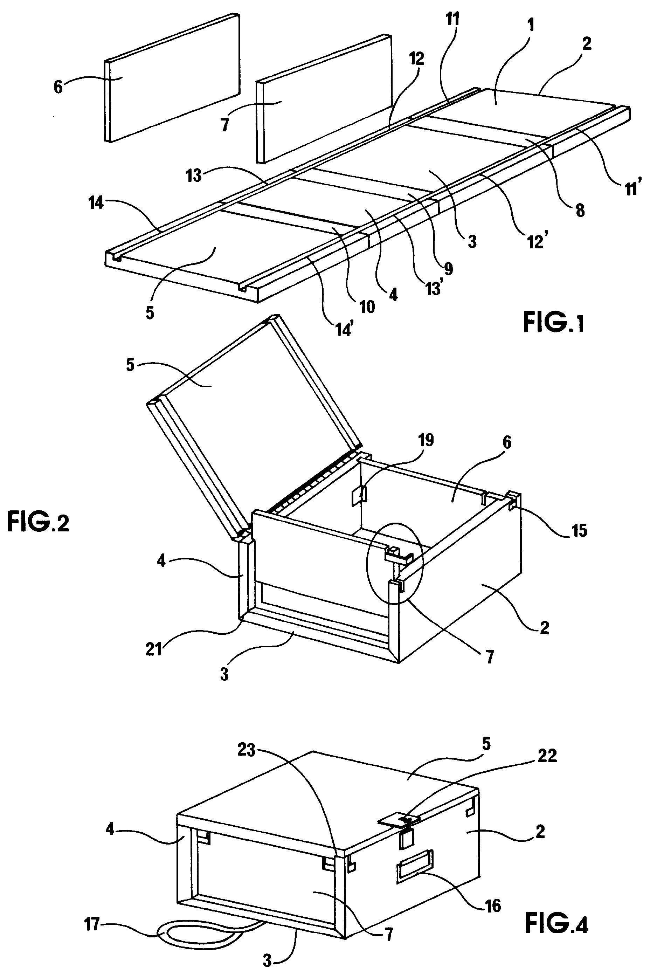

La ceinture (1) comporte au moins quatre éléments : un premier panneau frontal (2), un fond (3), un deuxième panneau frontal (4) et un couvercle (5). Ces éléments pourront être fabriqués en divers matériaux et notamment en bois ou en carton. Ils se présentent sous la forme de panneaux rectangulaires de dimensions et d'épaisseurs variables. Dans le mode particulier illustré par la figure 1, le couvercle (5) et le fond (3) ont des dimensions égales de même que les deux panneaux frontaux (2 et 4) afin qu'une fois la ceinture (1) pliée, les faces du couvercle (5) et du fond (3), ainsi que celles des panneaux frontaux soient bien en vis-à-vis et les côtés à angle droit.

Des articulations (8 à 10) permettent de relier le premier panneau frontal (2) au fond (3), le fond (3) au deuxième panneau frontal (4) et le deuxième panneau frontal (4) au couvercle (5). Ces articulations (8 à 10) pourront par exemple être des bandes de tissu collées sur les éléments. Néanmoins, tout moyen d'articulation est réalisable. Les éléments forment ainsi l'ensemble solidaire et pliable qu'est la ceinture (1).

Par ailleurs, les panneaux frontaux (2, 4) et le couvercle (5) présentent chacun au moins deux rainures sur l'une de leurs faces. Ces rainures (11 à 14 et 11' à 14') sont parallèles et continues. Elles peuvent avoir une profondeur et une largeur adaptées. Les rainures (11 à 14, 11' à 14') sont disposées de sorte qu'une fois la ceinture (1) formée, elles réalisent une coulisse continue.

La figure 1 illustre un mode particulier de réalisation de la ceinture (1) et des rainures (11 à 14, 11' à 14') formant la coulisse continue. Dans ce cas particulier, on réalise deux rainures sur chaque élément et la ceinture (1) présente deux alignements de rainures. Ces alignements sont parallèles entre eux et orientés dans le sens longitudinal de la ceinture. Le positionnement latéral des alignements de rainures peut être variable. Néanmoins, on placera préférentiellement les rainures à proximité de chaque bord longitudinal afin de réaliser un volume intérieur important.

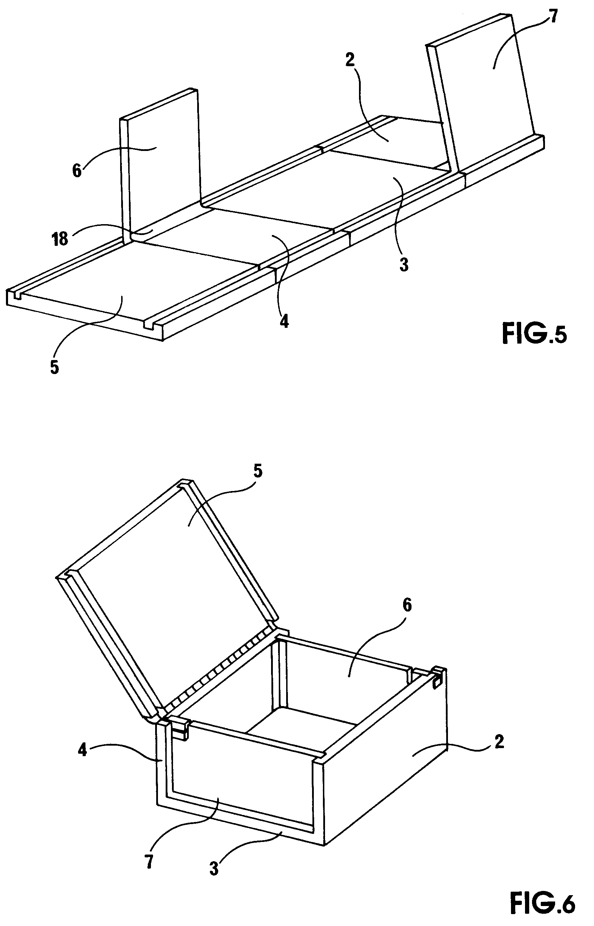

Dans un autre mode particulier de réalisation, les éléments constitutifs de la ceinture (1) sont biseautés au niveau des articulations (8 à 10) afin de faciliter la mise en forme de la ceinture. La présence de ces biseaux (21) est illustrée par la figure 2. Ces biseaux (21) seront préférentiellement réalisés à 45° par rapport aux faces des panneaux. Ils autorisent un bon contact entre les panneaux articulés et permettent une meilleure mise en forme et une meilleure résistance du conteneur. Néanmoins, d'autres réalisations sont envisageables.

Le conteneur comprend aussi des panneaux latéraux (6 et 7). Ces panneaux seront au moins au nombre de deux. C'est ce mode particulier qu'illustre la figure 1. Leurs dimensions peuvent être variables dans la mesure où elles autorisent la mise en forme de la caisse. L'épaisseur des panneaux sera préférentiellement inférieure à la largeur des rainures (11 à 14, 11' à 14') pour pouvoir les y glisser.

La figure 1 illustre le cas particulier où les panneaux latéraux (6, 7) sont rectangulaires. Leur largeur a une dimension sensiblement équivalente à celle de la largeur des panneaux frontaux (2, 4).

La figure 2 présente le mode particulier où les panneaux (6, 7) ont une épaisseur légèrement inférieure à la largeur des rainures afin de les faire coulisser facilement et précisément dans les rainures (11 à 14, 11' à 14').

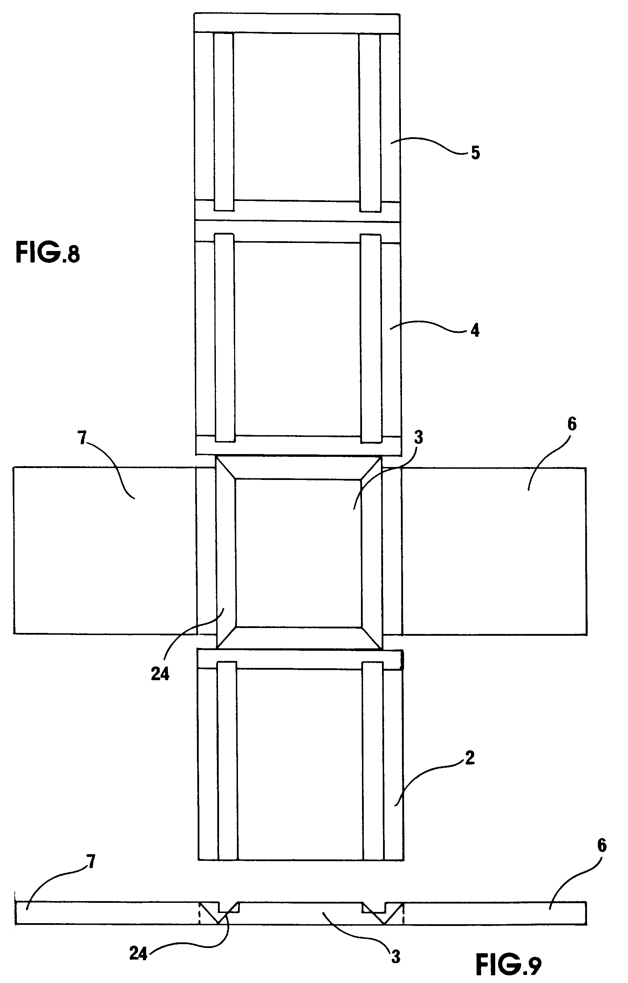

La figure 8 présente un mode particulier où les panneaux latéraux (6, 7) et le fond (3) sont biseautés au niveau de leurs bords en contact pour permettre une bonne mise en forme du conteneur. Ces biseaux (24) pourront par exemple être réalisés à 45° par rapport aux faces des panneaux. Ils permettent un bon appui des panneaux latéraux sur le fond et renforcent ainsi la cohésion du conteneur.

Les panneaux latéraux (6, 7) possèdent des crochets (15) permettant d'en maintenir l'épaisseur dans les rainures des panneaux frontaux (2, 4). Ces crochets peuvent être en acier ou en autres matériaux. Leur forme peut aussi être variable ainsi que leur dimension. Leur nombre n'est pas limité.

La figure 2 présente par exemple le cas de crochets (15) en U. Le crochet est fixé d'un côté au panneau latéral (6, 7) et de l'autre côté, à un panneau frontal (2, 4). Cette fixation est constituée par un encastrement du crochet (15) dans une entaille (20) réalisée près du bord sur le panneau latéral et sur le panneau frontal. Le crochet (15) permet donc d'assurer la cohésion du panneau latéral et du panneau frontal.

Des butées (19) qui peuvent être métalliques ou en toute autre matière et dont le nombre et la forme ne sont pas limités se positionnent préférentiellement sur les panneaux frontaux (2, 4) à proximité des rainures (11 et 13, 11' et 13'). De cette façon, elles permettent un blocage supplémentaire des panneaux latéraux (6, 7) dans les rainures (11 et 13, 11' et 13'). En effet, elles s'additionnent à la hauteur des rainures (11 et 13, 11' et 13') pour le blocage des bords des panneaux latéraux (6, 7). Elles seront par exemple utiles s'il y a un risque de fléchissement des panneaux frontaux (2, 4). Ce risque existe en cas de chargement très pesant ou si les dimensions de la caisse, et principalement la hauteur des panneaux frontaux (2, 4), sont importantes.

Un exemple de réalisation de cette butée (19) est représenté en figure 2. Dans ce cas, elle est constituée par une plaque d'acier pliée en L fixée sur un panneau frontal et constituant un appui plat sur le panneau latéral.

Dans un autre mode particulier de réalisation, les panneaux latéraux (6, 7) sont articulés sur la ceinture (1) au niveau des panneaux frontaux (2 et 4). Les figures 5, 6 et 7 illustrent ce mode de réalisation. Divers moyens d'articulation (18) peuvent être envisagés. On peut par exemple utiliser des bandes de tissus ou de polypropylène collées sur les panneaux à relier. Ainsi articulés, les panneaux (6, 7) sont solidarisés à la ceinture (1). Le conteneur devient alors monobloc, c'est-à-dire que tous ses éléments constitutifs sont solidaires. L'utilisateur ne pourra donc plus les égarer.

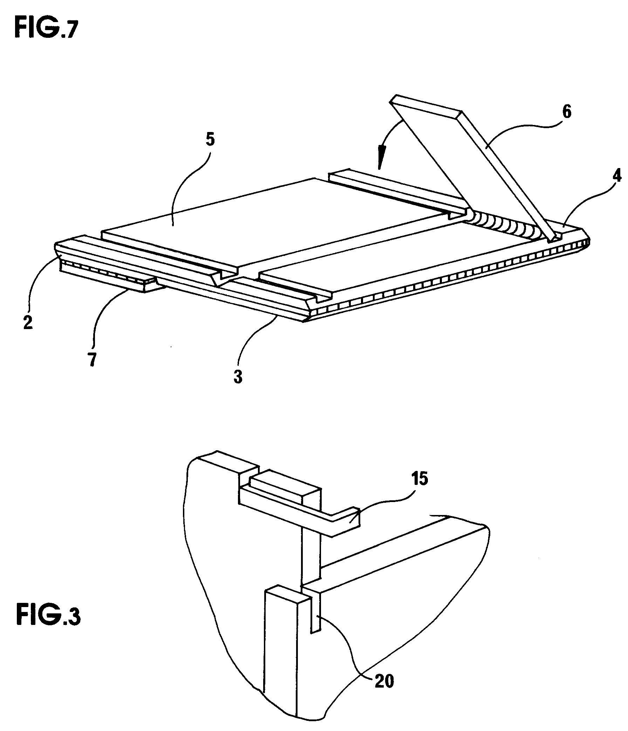

Par ailleurs, le conteneur est alors entièrement repliable, notamment selon le mode de réalisation illustré par la figure 7.

Dans un autre mode particulier de réalisation, le conteneur peut présenter plus de deux panneaux latéraux (6, 7) et plus de deux alignements de rainures (11 à 14, 11' à 14'). Selon ce mode, on peut compartimenter le volume intérieur du conteneur.

Divers éléments peuvent pat ailleurs être adjoints aux éléments constitutifs principaux du conteneur précédemment décrit suivant la réalisation envisagée.

Ainsi, dans un mode particulier de réalisation, le conteneur comporte des moyens de préhension (16, 17) afin de faciliter sa manutention et son transport. Différents moyens de préhension peuvent être envisagés.

A titre d'exemple, des poignées (16) peuvent être positionnées sur un ou plusieurs panneaux. Ces poignées (16) peuvent être en diverses matières notamment en acier. Leur nombre, leur dimension et leur conception sont variables. La figure 4 illustre une possibilité de positionnement des poignées mais cet exemple n'est pas limitatif.

Un autre moyen de préhension peut être constitué par des sangles (17). Ces sangles (17) peuvent être en cuir ou en tissu ou en d'autres matières. Leur nombre et leur dimension ne sont pas limités. Elles seront néanmoins préférentiellement conçues pour permettre une bonne prise en mains. Un mode particulier de réalisation consiste à fixer ces sangles (17) sur le fond (3) du conteneur. C'est ce cas qu'illustre la figure 4.

Le couvercle (5) peut par ailleurs présenter des moyens de fermeture (22). Ces moyens sont destinés à verrouiller le couvercle. Différentes solutions techniques sont possibles notamment celle illustrée par la figure 4. Dans ce cas, on réalise un verrou (22) en deux parties. La première est une plaque rectangulaire de dimensions variables pouvant être notamment en acier, présentant un trou de taille variable. Cette plaque est fixée sur le couvercle (5) par tout moyen de fixation courant. Elle ne repose néanmoins pas totalement sur le couvercle afin que le trou dépasse du bord du couvercle. L'autre partie composant le verrou est une languette pouvant être notamment en acier et de dimension variable que l'on fixe sur le premier panneau frontal (2).

L'extrémité de la languette est néanmoins libre et dépasse de la surface du panneau frontal (2). Elle s'introduit facilement dans le trou et peut se rabattre sur la surface de la plaque formant ainsi un obstacle à l'ouverture du couvercle (5).

Dans un autre mode particulier de réalisation, le couvercle (5) présente un rebord (23) comme illustré à la figure 4. Ce rebord (23) permet de renforcer le maintien en position des panneaux. Il est réalisé sur le bord du couvercle (5) que l'on vient appliquer sur l'épaisseur du premier panneau frontal (2) et ses dimensions sont variables. Néanmoins, la figure 4 illustre le fait qu'il faut préférentiellement dimensionner le rebord (23) afin que le couvercle (5) s'emboîte bien sur la tranche du panneau frontal (2). Dans cette configuration, le plat formé sur l'épaisseur du couvercle (5) s'applique sur le bord du premier panneau frontal (2). Il réalise ainsi un guide pour le bon positionnement des éléments constituant le conteneur et complète le rôle des rainures (11 à 14, 11' à 14').

Le conteneur pour le conditionnement de produits manufacturés unitaires ou en vrac destiné à constituer un emballage, décrit par la présente invention, est d'utilisation facile. Il est ici choisi de décrire son fonctionnement dans le mode particulier de réalisation où il est de forme sensiblement parallélépipédique.

Le montage du conteneur est une opération simple. Les éléments composant la ceinture (1) sont articulés. De ce fait, on peut plier la ceinture (1) afin de former quatre faces du parallélépipède. En laissant le couvercle (5) ouvert, il est facile d'engager les panneaux latéraux (6, 7) dans la coulisse réalisée par les rainures (11 à 14, 11' à 14'). Cette mise en position est schématisée par la figure 2.

Les crochets (15) permettant de maintenir les panneaux latéraux (6, 7) dans les rainures des panneaux frontaux (2, 4), il convient de les fixer dans les entailles (20) prévues sur les panneaux au moment où on engage ces derniers dans la coulisse. La figure 3 illustre cette mise en place des crochets (15). Il est ensuite possible de rabattre le couvercle (5) du conteneur.

Une fois ces opérations effectuées, on peut utiliser le conteneur afin de stocker et de manipuler les produits manufacturés auxquels il est destiné. Le chargement du conteneur est très facile et s'effectue notamment suivant deux possibilités.

Il est d'abord possible de charger le conteneur par le dessus. Il suffit dans ce cas d'ouvrir le couvercle (5) et de disposer les produits dans le volume intérieur.

Il est aussi possible de charger le conteneur par le côté. En effet, une fois le couvercle (5) relevé, on peut désengager totalement ou partiellement l'un des panneaux latéraux (6, 7). L'accès ainsi créé permet de charger le conteneur par le côté aussi bien que par le dessus.

Le chargement ainsi réalisé peut être relativement lourd. Un conteneur en bois, réalisé suivant le mode de réalisation ici décrit, est en effet particulièrement résistant. A titre d'exemple, on a obtenu de bons résultats avec un conteneur de dimensions 0,8 m X 0,5 m x 0,5 m supportant une charge de 150 kg. Cette solidité permet d'envisager de larges possibilités d'utilisation du conteneur décrit par la présente invention. Après l'utilisation, il est possible de démonter et de replier la caisse afin qu'elle occupe un plus faible volume lors de son stockage, de sa manutention ou de son transport. Pour ce faire, il suffit de désengager, en les soulenvant, les panneaux latéraux (6, 7) de la coulisse et de déplier la ceinture (1).

Dans le mode particulier de réalisation où le conteneur est monobloc, c'est-à-dire où les panneaux latéraux (6, 7) sont articulés sur la ceinture (1), la mise en forme s'effectue d'une manière particulièrement simple. Il suffit en effet de placer les panneaux latéraux (6, 7) à angle droit par rapport aux panneaux frontaux (2, 4) sur lesquels ils sont articulés. On plie ensuite la ceinture (1) en engageant les panneaux latéraux (6, 7) dans les rainures (11 à 14, 11' à 14'). Les crochets (15) permettant de maintenir en position l'épaisseur des panneaux latéraux dans les rainures des panneaux frontaux, il convient alors de les introduire en force dans les entailles (20). Le couvercle (5) peut alors être rabattu. Le dépliage s'effectue en inversant les opérations.

La figure 7 schématise une possibilité de pliage d'un conteneur monobloc vide. Dans ce cas, une fois les panneaux latéraux (6, 7) rabattus sur les panneaux frontaux (2, 4), on plie la ceinture (1) en deux au niveau de l'articulation du fond (3) et du deuxième panneau frontal (4). Dans cette configuration, le conteneur replié occupe une place très réduite. Dans le cas du conteneur monobloc, le chargement ne s'effectue que par le dessus, les panneaux latéraux (6, 7) ne pouvant pas coulisser entre les panneaux frontaux (2, 4).

Dans un mode particulier de réalisation, le conteneur présente des moyens de préhension (16, 17) afin de faciliter sa manipulation.

Lorsque ces moyens sont placés sur un ou plusieurs panneaux, la manutention de la caisse se fera couvercle (5) rabattu afin de préserver la cohésion des éléments constitutifs du conteneur.

Pour permettre la manutention du conteneur couvercle (5) ouvert, il est possible de fixer les moyens de préhension (16, 17) sur le fond. Dans le mode de réalisation illustré à la figure 4, des sangles (17) sont fixées sur le fond (3) et permettent de soulever la caisse sans nuire à la cohésion des panneaux même si le couvercle (5) est ouvert. Ainsi, on peut, suivant l'emplacement des moyens de préhension, manipuler le conteneur couvercle ouvert ou fermé.

Il est par ailleurs possible d'adapter des moyens de fermeture (22) du couvercle (5). Ce point a été évoqué précédemment. Suivant le mode de réalisation illustré à la figure 4, cette fermeture s'opère en deux étapes, d'abord lorsqu'on rabat le couvercle (5), on introduit la languette du verrou (22) dans le trou de la plaque fixée sur le couvercle (5). Ensuite, on plie la languette de façon à rabattre son extrémité libre sur la plaque du verrou (22). La fermeture est ainsi réalisée par obstacle.

D'autres modes de réalisation auraient pu être envisagés sans pour autant sortir du cadre de la présente invention.

## Revendications

1. Conteneur pour le conditionnement de produits manufacturés unitaires ou en vrac, destiné à constituer un emballage réutilisable ou jetable de forme sensiblement polyédrique et de faible volume, pour le stockage et la manutention des produits, comportant :
- une ceinture (1) composée d'au moins quatre éléments à savoir un premier panneau frontal (2), un fond (3), un deuxième panneau frontal (4) et un couvercle (5), ces éléments étant reliés entre eux par des articulations (8 à 10) permettant de plier la ceinture (1) afin de former au moins quatre faces du conteneur,
- au moins une rainure (11 à 14, 11' à 14') disposée à proximité de chaque bord longitudinal sur le premier panneau frontal (2), le deuxième panneau frontal (4), le fond (3) et le couvercle (5), ladite rainure de chaque élément étant alignée pour réaliser une coulisse continue,
- au moins deux panneaux latéraux (6, 7) engagés dans la coulisse,
caractérisé par le fait qu'il présente des moyens (15), de la forme de crochets, étant fixés par encastrement sur le panneau latéral (6, 7) et sur l'un des panneaux frontaux (2, 4)et permettant de maintenir l'épaisseur des panneaux latéraux dans les rainures des panneaux frontaux, pour réaliser un emballage bon marché repliable et réutilisable.

2. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait que chacun des panneaux latéraux est relié à un panneau frontal par un moyen d'articulation pour solidariser tous les éléments constitutifs du conteneur, les rendre repliables et monoblocs.

3. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait que les panneaux frontaux (2, 4), le fond (3) et le couvercle (5) sont biseautés au niveau des articulations (8, 9, 10) afin de faciliter la mise en forme de la ceinture (1).

4. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait qu'il présente des moyens de préhension (16, 17) permettant de manipuler facilement le conteneur pour le conditionnement.

5. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait que les panneaux latéraux (6 et 7) et le fond (3) sont biseautés au niveau de leurs bords en contact pour permettre une bonne mise en forme du conteneur.

6. Conteneur pour le conditionnement de produits manufacturés unitaires ou en vrac, destiné à constituer un emballage réutilisable ou jetable de forme sensiblement polyédrique et de faible volume, selon la revendication 4, caractérisé par le fait que lesdits moyens de préhension (16, 17) sont constitués par des poignées (16) permettant la manutention du conteneur pour le conditionnement quand le couvercle (5) est fermé pour bloquer les parois latérales (6, 7).

7. Conteneur pour le conditionnement de produits manufacturés unitaires ou en vrac, destiné à constituer un emballage réutilisable ou jetable de forme sensiblement polyédrique et de faible volume, selon la revendication 4, caractérisé par le fait que lesdits moyens de préhension (16, 17) sont constitués par des sangles (17) fixées sur le fond (5), ces sangles (17) permettant la manutention du conteneur pour le conditionnement que le couvercle (5) soit ouvert ou fermé.

8. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait qu'il possède des moyens de blocage (22) du couvercle lorsque le conteneur est fermé.

9. Conteneur pour le conditionnement de produits manufacturés unitaires ou en vrac, destiné à constituer un emballage réutilisable ou jetable de forme sensiblement polyédrique et de faible volume, selon la revendication 1, caractérisé par le fait que le couvercle (5) est aménagé pour maintenir les panneaux latéraux (6, 7) et permettre la préhension quand le conteneur est plein.

## Claims

1. Conditioning container for unitary or lose manufactured products, aimed at forming a re-usable or disposable, substantially polyhedrically shaped, small-size packaging for storing and handling the products, including:
- a belt (1) comprised of at least four elements, i.e. a first front panel (2), a bottom (3), a second front panel (4) and a lid (5), these elements being connected to each other through hinged joints (8 to 10) allowing to fold the belt (1) in order to form at least four faces of the container,
- at least one groove (11 to 14, 11' to 14') arranged in the vicinity of each longitudinal edge on the first front panel (2), the second front panel (4), the bottom (3) and the lid (5), said groove of each element being aligned so as to form a continuous groove,
- at least two side panels (6, 7) inserted into the continuous groove,
characterised in that it has means (15), in the shape of hooks, being fixed through insertion to the side panel (6, 7) and to one of the front panels (2, 4) and allowing to maintain the thickness of the side panels in the grooves of the front panels, in order to manufacture a cheap foldable and re-usable packaging.

2. Conditioning container for unitary or lose manufactured products, aimed at forming a re-usable or disposable, substantially polyhedrically shaped, small-size packaging, according to claim 1, characterised in that each side panel is connected to a front panel through a hinging means, in order to make all the components of the container integral with each other, foldable and of one single piece.

3. Conditioning container for unitary or lose manufactured products, aimed at forming a re-usable or disposable, substantially polyhedrically shaped, small-size packaging, according to claim 1, characterised in that the front panels (2, 4), the bottom (3) and the lid (5) are bevelled at the level of the hinged joints (8, 9, 10), in order to facilitate the shaping of the belt (1).

4. Conditioning container for unitary or lose manufactured products, aimed at forming a re-usable or disposable, substantially polyhedrically shaped, small-size packaging, according to claim 1, characterised in that it has gripping means (16, 17) allowing to easily handle the conditioning container.

5. Conditioning container for unitary or lose manufactured products, aimed at forming a re-usable or disposable, substantially polyhedrically shaped, small-size packaging, according to claim 1, characterised in that the side panels (6 and 7) and the bottom (3) are bevelled at the level of their contacting edges, in order to allow a good shaping of the container.

6. Conditioning container for unitary or lose manufactured products, aimed at forming a re-usable or disposable, substantially polyhedrically shaped, small-size packaging, according to claim 4, characterised in that said gripping means (16, 17) are formed of handles (16) allowing to handle the conditioning container when the lid (5) is closed to lock the side walls (6, 7).

7. Conditioning container for unitary or lose manufactured products, aimed at forming a re-usable or disposable, substantially polyhedrically shaped, small-size packaging, according to claim 4, characterised in that said gripping means (16, 17) are formed of straps (17) fixed to the bottom (5), these straps (17) allowing to handle the conditioning container, whether the lid (5) is open or closed.

8. Conditioning container for unitary or lose manufactured products, aimed at forming a re-usable or disposable, substantially polyhedrically shaped, small-size packaging, according to claim 1, characterised in that it has means (22) for locking the lid when the container is closed.

9. Conditioning container for unitary or lose manufactured products, aimed at forming a re-usable or disposable, substantially polyhedrically shaped, small-size packaging, according to claim 1, characterised in that the lid (5) is provided for maintaining the side panels (6, 7) and allowing the gripping when the container is full.

## Patentansprüche

1. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, zur Lagerung und Handling der Erzeugnisse, umfassend:
- einen Gürtel (1), der aus mindestens vier Elementen, nämlich einer ersten Stirnplatte (4), einem Boden (3), einer zweiten Stirnplatte (4) und einem Deckel (5), besteht, wobei diese Elemente über Gelenkverbindungen (8 bis 10) miteinander verbunden sind, die es erlauben, den Gürtel (1) zu falten, um mindestens vier Seiten des Behälters zu bilden,
- mindestens eine Nute (11 bis 14, 11' bis 14'), die in der Nähe jedes Längsrandes an der ersten Stirnplatte (2), der zweiten Stirnplatte (4), am Boden (3) und am Deckel (5) angeordnet ist, wobei die genannte Nute jedes Elements so ausgerichtet ist, daß sie eine durchgehende Rinne bildet,
- mindestens zwei in der Rinne eingeführte Seitenplatten (6, 7),
dadurch gekennzeichnet, daß er Mittel (15), in der Form von Haken, aufweist, die durch Einbau an der Seitenplatte (6, 7) und an einer der Stirnplatten (2, 4) befestigt sind und es erlauben, die Dicke der Seitenplatten in den Nuten der Stirnplatten zu halten, um eine billige zusammenklappbare Mehrwegverpackung herzustellen.

2. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß die Seitenplatten jeweils über Gelenkverbindungsmittel mit einer Stirnplatte verbunden sind, um alle Bestandteile des Behälters fest miteinander zu verbinden, faltbar und aus einem Stück zu machen.

3. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß die Stirnplatten (2, 4), der Boden (3) und der Deckel (5) im Bereich der Gelenkverbindungen (8, 9, 10) abgeschrägt sind, um die Gestaltung des Gürtels (1) zu erleichtern.

4. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß er Greifmittel (16, 17) aufweist, die es erlauben, den Verpackungsbehälter leicht zu verstellen.

5. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß die Seitenplatten (6 und 7) und der Boden (3) im Bereich ihrer in Berührung kommenden Ränder abgeschrägt sind, um eine gute Gestaltung des Behälters zu erlauben.

6. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 4, dadurch gekennzeichnet, daß die genannten Greifmittel (16, 17) aus Griffen (16) bestehen, die die Handling des Verpackungsbehälters erlauben, wenn der Deckel (5) geschlossen ist, um die Seitenwände (6, 7) festzuhalten.

7. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 4, dadurch gekennzeichnet, daß die genannten Greifmittel (16, 17) aus am Boden (5) befestigten Riemen (17) bestehen, wobei diese Riemen (17) die Handling des Verpackungsbehälters erlauben sowohl bei offenem als auch bei geschlossenem Deckel (5).

8. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß er Mittel (22) zum Verschließen des Deckels, wenn der Behälter geschlossen ist, umfaßt.

9. Verpackungsbehälter für einzelne oder eingeschüttete industrielle Erzeugnisse, zum Bilden einer Mehr- oder Einwegverpackung einer im wesentlichen vielflächigen Gestalt und eines geringen Volumens, nach Anspruch 1, dadurch gekennzeichnet, daß der Deckel (5) so vorgesehen ist, daß er die Seitenplatten (6, 7) festhält und das Greifen ermöglicht, wenn der Behälter voll ist.
